# EUROPEAN PATENT APPLICATION

(11) **EP 3 322 140 A1**
(43) Date of publication of application: **16.05.2018**
(21) Application number: 16789081.3
(22) Date of filing: 09.03.2016
(51) Int. Cl.: H04L 12/723

(54) **BIER PACKET TRANSMISSION METHOD AND DEVICE**

(30) Priority: 08.07.2015 CN 201510397641
(71) Applicant: ZTE Corporation, Shenzhen, Guangdong 518057 (CN)
(72) Inventor: HU, Fangwei, Shenzhen Guangdong518057 (CN); ZHANG, Zheng, Shenzhen Guangdong 518057 (CN)
(74) Representative: Regimbeau
(86) International application number: PCT/CN2016/075970
(87) International publication number: WO 2016/177087

(57) **Abstract**

Disclosed are a Bit Indexed Explicit Replication (BIER) packet transmission method and device. The method includes: encapsulating, by a BIER node, a BIER packet according to link capability attribute information supported by a non-BIER node carried by an extended Interior Gateway Protocol (IGP); and transmitting, by the BIER node, an encapsulated BIER packet to the non-BIER node.

## Description

### TECHNICAL FIELD

The present disclosure relates to, but is not limited to, the network communication technology and, in particular, relates to a Bit Indexed Explicit Replication (BIER) packet transmission method and device.

### BACKGROUND

Internet Protocol (IP) multicast technologies realize efficient point-to-multipoint data transmission in an IP network, effectively saving a network bandwidth and reducing a network load. Therefore, IP multicast technologies are widely used in real-time data transmission, multimedia conferencing, data replication, Internet Protocol televisions (IPTVs), gaming, simulation and many other aspects. Related multicast technologies are generally implemented by a Protocol Independent Multicast (PIM) protocol (including a PIM-sparse-mode (PIM-SM) and a PIM-dense-mode (PIM-DM)), a Multicast Source Discovery Protocol (MSDP), etc. A common feature of these multicast protocols is that a control plane multicast tree needs to be constructed. A network plane is turned into a logic tree by such multicast tree to achieve point-to-multipoint data forwarding in multicast forwarding and avoid a loop. Intermediate nodes of such protocols that are based on distribution tree construction need to maintain status of complex multicast forwarding information. With a growing network size and increasing multicast data traffic, such multicast technologies are facing increasingly greater challenges in costs, operation and maintenance.

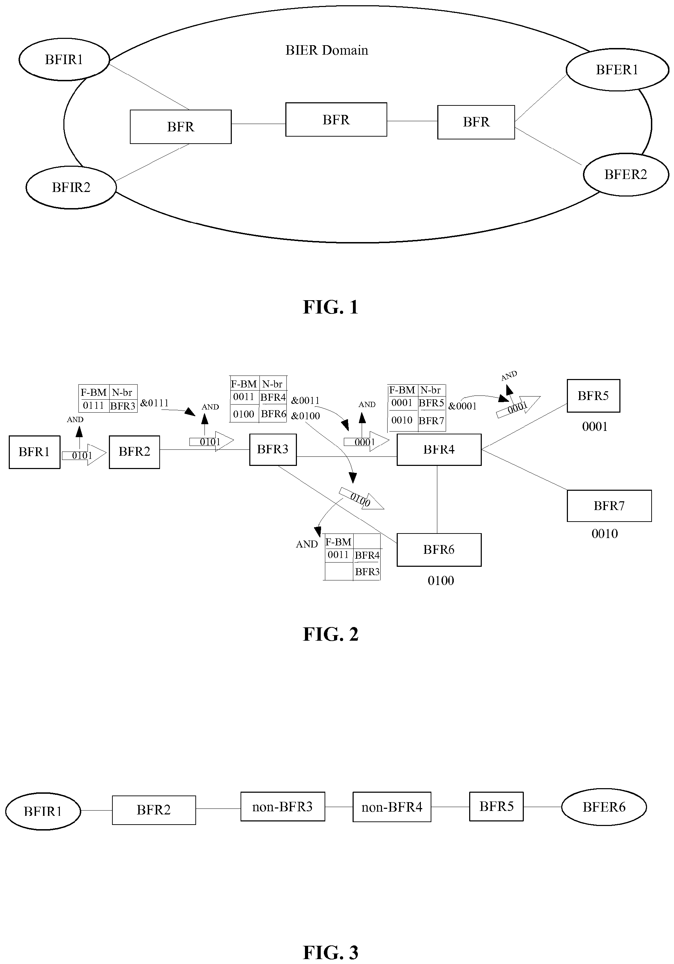

In view of this, the industry has proposed a new technology called bit indexed explicit replication (BIER) for constructing a multicast forwarding path. This technology presents a new multicast technical architecture that does not require distribution tree construction. As illustrated in FIG. 1, a router that supports the BIER technology is called a bit-forwarding router (BFR), a multicast forwarding domain that includes one or more BFRs is called a BIER domain, a BFR that is located at an edge of the BIER domain and used for encapsulating a BIER data packet for user multicast data is called a bit-forwarding ingress router, and an edge BFR that decapsulates the BIER data packet is called a bit-forwarding egress router. The multicast data is encapsulated by the BFIR, enters the BIER domain, is forwarded depending on a header of the BIER packet in the BIER domain, passes through one or more BFERs, and then departs the BIER domain. In the BIER domain, a device that receives and forwards the BIER packet is called a transit BFR of the BIER packet. A BFR may be both a BFIR and a BFER according to packet encapsulation and packet decapsulation respectively.

In the BIER domain, each edge BFER is allocated a globally unique bit position in the entire BIER sub-domain. Each BFER uses an interior gateway protocol (IGP) to perform flooding of its own bit position in the BIER domain. All bit positions form a bitstring. Transmission and routing of the data packet depend on the bitstring. When other BFRs receive a packet header containing the BIER, they forward the packet based on a Bit Index Forwarding Table (BIFT) according to the bitstring carried in the packet header. This principle of forwarding based on a BIER bit changes from forwarding based on multicast distribution tree construction to multicast forwarding in a mode of unicast searching and forwarding by using a bit identifier, reducing forwarding costs in a network.

FIG. 2 describes a BIER forwarding process. As illustrated in FIG. 2, a BFR1 is an ingress BFR, and a BFR5, a BFR6 and a BFR7 are all egress BFRs. A bit position of the egress BFR5, a bit position of the egress BFR6 and a bit position of the egress BFR7 are 0001, 0010 and 0100 respectively. Each egress BFR notifies in advance its own bit position to the ingress BFR via an IGP, such as an Intermediate System-to-intermediate System (IS-IS) protocol or an Open Shortest Path First (OSPF) protocol, in a BIER domain. After receiving notifications of bit position from the BFR5, the BFR6 and the BFR7, the BFR1 saves the received information in a local BIFT. After the BFR1 receives a multicast packet, if the multicast packet is to be transmitted to the BFR5 and the BFR6, the BFR1 calculates a value of bitstring of the multicast packet as 0101 and encapsulates the multicast packet as a BIER packet according to a Forwarding Bit Mask (F-BM) saved in the BIFT and a neighbor (NBR) mapping relation that supports a BIER protocol. The bitstring in a BIER packet header is filled in with 0101 and forwarded to a BFR2. After receiving the packet, the BFR2 searches for an entry prestored in the BIFT, determines from the entry that the packet needs to be forwarded to a BFR3, and then performs an "AND" operation on the bitstring and an F-BM of the matching entry to obtain 0101. The BFR2 refills the BIER packet with 0101 as the bitstring in the BIER header and forwards the packet to the BFR3. After receiving the packet, the BFR3 searches its own BIFT. The BFR3 has two matching entries indicating that the packet is to be forwarded to the BFR4 and the BFR6 separately in a next hop. For a first entry, the BFR3 performs an "AND" operation on the value of the bitstring and an F-BM in the first entry to obtain a result of 0001. For a second entry, the BFR3 performs an "AND" operation on the value of the bitstring and an F-BM in the second entry to obtain a result of 0100. Then the BFR3 forwards the packet from two interfaces respectively to the BFR4 and the BFR6. A value of a bitstring in a BIER header of the BFR4 is 0001. A value of a bitstring in a BIER header forwarded to the BFR6 is 0100. For the packet that reaches the BFR6, the BFR6 discovers that the value of the bitstring thereof is the same as the bit position of which notified by the BFR6, which indicates that the BFR6 is a destination of the packet, and thus the BFR6 decapsulates the packet. When the packet reaches the BFR4, the BFR4 forwards the packet to the BFR5 according to the preceding forwarding principle. Then the BFR5 decapsulates the BIER packet. At this point, transmission of the multicast packet form the ingress BFR1 node to the egress BFR5 node and the egress BFR6 node in the BIER domain is completed.

Related BIER technologies take into account only a scenario where routers in a BIER domain support the BIER technologies. If a device in the BIER domain does not support BIER forwarding, a multicast packet will be discarded. Such hybrid networking scenario is a common application scenario at an initial BIER deployment stage. FIG. 3 is a networking diagram of a hybrid scenario in the related art. As illustrated in FIG. 3, a BFIR1 is an ingress BFR used for encapsulating a BIER packet, a BFR2 and a BFR5 are intermediate transit BFRs, a non-BFR3 and a non-BFR4 are non-BFRs, and a BFR6 is an egress BFR. When a multicast packet is encapsulated by the ingress BIER1 and the encapsulated packet is transmitted to the non-BFR3 via the BFR2, since the non-BFR3 cannot recognize BIER encapsulation, the non-BFR3 cannot process the packet and thus discard the packet.

### SUMMARY

The following is a summary of a subject matter described herein in detail. This summary is not intended to limit the scope of the claims.

Embodiments of the present invention provide a BIER packet transmission method and system, capable of allowing a non-BIER node to transmit a BIER packet in a BIER network.

Embodiments of the present invention provide a BIER packet transmission method. The method includes that a BIER node encapsulates a BIER packet according to link capability attribute information supported by a non-BIER node carried by an extended IGP; and the BIER node transmits an encapsulated BIER packet to the non-BIER node.

Optionally, when the IGP is an IS-IS protocol, the link capability attribute information supported by the non-BIER node is carried by a non-bier-tunnel-type sub-Type-Length-Value (sub-TLV) newly added to an extended IS-IS protocol, and the sub-TLV is carried by a router capability TLV of the IS-IS protocol.

Optionally, a tunnel type supported by a non-bier-tunnel-type sub-TLV of the IS-IS protocol includes a Multi-Protocol Label Switching (MPLS) tunnel, a generic routing encapsulation (GRE) tunnel and a User Datagram Protocol (UDP) tunnel.

Optionally, when the IGP is an OSPF protocol, the link capability attribute information is carried by an OSPF non-bier-tunnel-type capability attribute newly added to an extended OSPF protocol, and the attribute is carried by an OSPF router informational capability.

Optionally, a tunnel type supported by an OSPF non-bier-tunnel-type capability attribute of the OSPF protocol includes an MPLS tunnel, a GRE tunnel and a UDP tunnel.

Optionally, the method further includes that the BIER node decapsulates the encapsulated BIER packet received from the non-BIER node to obtain the BIER packet.

Optionally, the BIER node encapsulates the BIER packet according to the link capability attribute information supported by the non-BIER node carried by the extended IGP as follows: The BIER node encapsulates the BIER packet according to a tunnel type that is included in the link capability attribute information supported by the non-BIER node carried by the extended IGP.

Embodiments of the present invention further provide a computer-readable storage medium, which is configured to store computer-executable instructions for executing any method described above.

Embodiments of the present invention further provide a BIER packet transmission device. The device is applied to a BIER node and includes an encapsulation module configured to encapsulate a BIER packet according to link capability attribute information supported by a non-BIER node carried by an extended IGP; and a transmission module configured to transmit an encapsulated BIER packet to the non-BIER node.

Optionally, when the IGP is an IS-IS protocol, the link capability attribute information supported by the non-BIER node is carried by a non-bier-tunnel-type sub-Type-Length-Value (sub-TLV) newly added to an extended IS-IS protocol, and the sub-TLV is carried by a router capability TLV of the IS-IS protocol.

Optionally, a tunnel type supported by a non-bier-tunnel-type sub-TLV of the IS-IS protocol includes an MPLS tunnel, a GRE tunnel and a UDP tunnel.

Optionally, when the IGP is an OSPF protocol, the link capability attribute information is carried by a non-bier-tunnel-type capability attribute newly added to an extended OSPF protocol, and the attribute is carried by an OSPF router informational capability.

Optionally, a tunnel type supported by a non-bier-tunnel-type capability attribute of the OSPF protocol includes an MPLS tunnel, a GRE tunnel and a UDP tunnel.

Optionally, the device further includes a decapsulation module configured to decapsulate the encapsulated BIER packet received from the non-BIER node to obtain the BIER packet.

Optionally, the encapsulation module is configured to encapsulate the BIER packet according to a tunnel type that is included in the link capability attribute information supported by the non-BIER node carried by the extended IGP.

In embodiments of the present invention, a BIER node encapsulates a BIER packet according to link capability attribute information supported by a non-BIER node carried by an extended IGP; and the BIER node transmits an encapsulated BIER packet to the non-BIER node. In this way, in embodiments of the present invention, capability notification and negotiation are performed according to the link attribute supported by the non-BIER node, and different forwarding tunnels are constructed for the BIER packet according to different link attributes, so that the non-BIER node can transmit the BIER packet in a BIER network.

Other aspects can be understood after the accompanying drawings and detailed description are read and understood.

### BRIEF DESCRIPTION OF DRAWINGS

FIG. 1 is a BIER technology based networking diagram in the related art.
FIG. 2 is a flowchart of a BIER technology based forwarding process in the related art.
FIG. 3 is a networking diagram of a hybrid scenario in the related art.
FIG. 4 is a flowchart of a BIER packet transmission method according to an embodiment of the present invention.
FIG. 5 is a format chart of an IS-IS router capability TLV according to an embodiment of the present invention.
FIG. 6 is a format chart of an OSPF router informational capability TLV according to an embodiment of the present invention.
FIG. 7 is a format chart of a non-bier-tunnel-type sub-TLV according to an embodiment of the present invention.
FIG. 8 is a flowchart of BIER packet transmission based on an MPLS tunnel according to an embodiment of the present invention.
FIG. 9 is a flowchart of BIER packet transmission based on a GRE tunnel according to an embodiment of the present invention.
FIG. 10 is a flowchart of BIER packet transmission based on a UDP tunnel according to an embodiment of the present invention.
FIG. 11 is a structure diagram of a BIER packet transmission device according to an embodiment of the present invention.

### DETAILED DESCRIPTION

Embodiments of the present invention will be described below in detail with reference to the accompanying drawings. It is to be understood that the embodiments described below are intended to explain and illustrate the present invention, but not to limit the present invention.

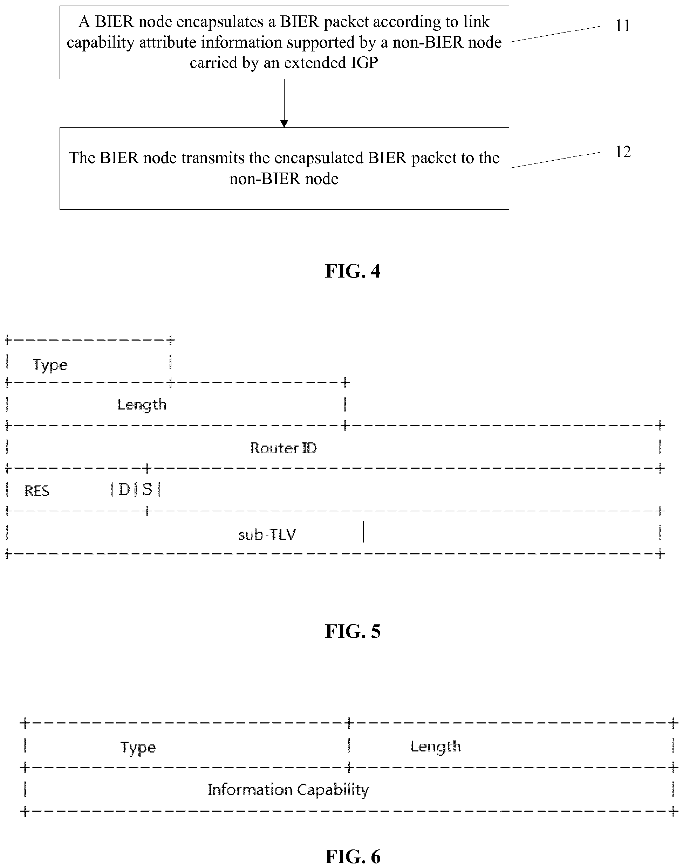

FIG. 4 is a flowchart of a BIER packet transmission method according to an embodiment of the present invention. As illustrated in FIG. 4, the BIER packet transmission method provided by this embodiment includes the steps described below.

In step 11, a BIER node encapsulates a BIER packet according to link capability attribute information supported by a non-BIER node carried by an extended IGP.

The step 11 includes that the BIER node encapsulates the BIER packet according to a tunnel type that is included in the link capability attribute information supported by the non-BIER node carried by the extended IGP.

In an embodiment, when the IGP is an IS-IS protocol, the link capability attribute information supported by the non-BIER node is carried by a non-bier-tunnel-type sub-TLV newly added to an extended IS-IS protocol, and the sub-TLV is carried by a router capability TLV of the IS-IS protocol. A tunnel type supported by a non-bier-tunnel-type sub-TLV of the IS-IS protocol includes a Multi-Protocol Label Switching (MPLS) tunnel, a Generic Routing Encapsulation (GRE) tunnel and a User Datagram Protocol (UDP) tunnel.

A value of the type field of the IS-IS router capability TLV is 242. The IS-IS router capability TLV is carried by an LSP message of the IS-IS protocol and used for notifying related router capability information.

In an embodiment, when the IGP is an OSPF protocol, the link capability attribute information is carried by a non-bier-tunnel-type capability attribute newly added to an extended OSPF protocol, and the attribute is carried by an OSPF router informational capability. A tunnel type supported by an OSPF non-bier-tunnel-type capability attribute of the OSPF protocol includes an MPLS tunnel, a GRE tunnel and a UDP tunnel.

The OSPF router informational capability is a field in a message in a notification process of a related OSPF protocol BFR.

In step 12, the BIER node transmits the encapsulated BIER packet to the non-BIER node.

Additionally, the method further includes that the BIER node decapsulates the encapsulated BIER packet received from the non-BIER node to obtain the BIER packet.

By way of example, in FIG. 3, a non-BFR3 and a non-BFR4 are devices not supporting BIER forwarding (i.e., non-BIER nodes). In this embodiment, a BFR device (i.e., BIER node) and a non-BFR device (i.e., non-BIER node) use an IGP to notify tunnel types supported by their own. Assuming that both the BFR and the non-BFR support a Multi-Protocol Label Switching (MPLS) label tunnel type (i.e., MPLS tunnel type), the non-BFR3, the non-BFR4, a BFR2 and a BFR5 use a router capability type-length-value (TLV) of the IGP (e.g., IS-IS protocol) to notify that the MPLS label tunnel type is supported. At this moment, after a BIER packet is forwarded to the BFR2, the BFR2 discovers that a neighbor in a bit index forwarding table is the BFR5, but a neighbor indicated by a shortest path tree of the IS-IS protocol is the non-BFR3, i.e., it is considered that the non-BFR3 does not support BIER forwarding. Moreover, after it is found that a supported tunnel type carried by a router capability TLV notified by the BFR5 and the non-BFR3 is the MPLS label, the BFR2 further encapsulates a layer of MPLS packet header outside a related BIER packet. A label of the MPLS packet header is assigned by a related Label Distribution Protocol (LDP) or other related technologies, to which the embodiment of the present invention is not to limit. The BFR2 forwards a BIER packet encapsulated with the MPLS header to the non-BFR3. Upon receiving the packet, the non-BFR3 searches a label forwarding table according to the outer layer of MPLS header and forwards the packet to the non-BFR4. Then the non-BFR4 forwards the packet to the BFR5. At this point, packet transmission on the non-BFR device is completed. During the entire forwarding process, the BIER packet and encapsulation are transparent to the non-BFR device, and the non-BFR device does not sense the BIER packet and encapsulation contents.

The present invention will be described below in detail through multiple embodiments.

### Embodiment 1

In this embodiment, an IS-IS protocol is used as a control plane protocol to construct a BIER forwarding infrastructure in the BIER technology. The IS-IS protocol notifies a BIER sub-domain identifier (sub-domain ID), a BFR identifier (BFR-ID), a BFR prefix and other necessary information. The IS-IS protocol uses such information to construct a BIER bit index forwarding information table based on a shortest path tree algorithm. In this embodiment, the IS-IS protocol is used to notify parameters such as tunnel type information. A specific implementation mode will be described below in detail with reference to FIG. 5.

FIG. 5 is a format chart of an IS-IS Router Capability TLV. As illustrated in FIG. 5, the IS-IS router capability TLV includes a type, a length, a router ID, a reserved field (RES), and a sub-TLV.

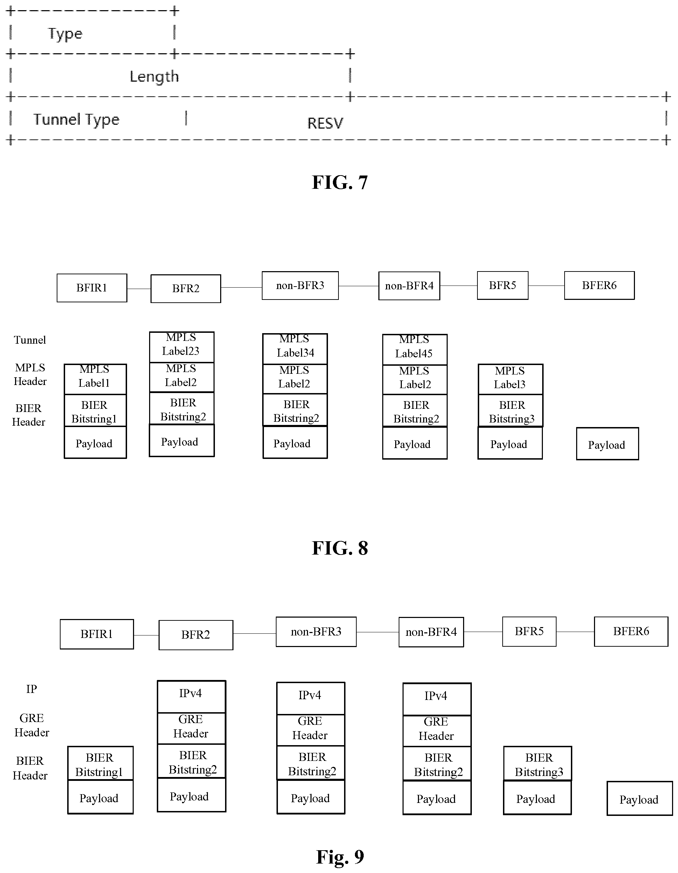

A value of the type is 242. The IS-IS router capability TLV is encapsulated in a label switched path (LSP) packet of the IS-IS protocol to define and distribute a capability attribute for a device. Related definitions include a capability description for a traffic engineering (TE) node, a Nickname sub-TLV of a Transparent Interconnection of Lots of Links (TRILL) protocol, an AFFINITY sub-TLV of the TRILL protocol, an IPv4 TE Router ID sub-TLV, an IPv6 TE Router ID sub-TLV of a TRILL and the like. In this embodiment, a non-bier-tunnel-type sub-TLV is added to a router capability TLV of an extended IS-IS protocol and used for carrying non-BFR tunnel type information. A format of the non-bier-tunnel-type sub-TLV is illustrated in FIG. 7. The non-bier-tunnel-type sub-TLV includes a type, a length, a tunnel type and a reserved field (RESV).

A value of the type field is recommended to be 19 or to be determined. The value of the type field may be undetermined and assigned by the Internet Assigned Numbers Authority (IANA) of the Internet Engineering Task Force (IETF). The tunnel type field indicates a type of a tunnel. A length of this field is 8 bits. A value of each bit is described below.

The tunnel type bit 0 is set to 1, the tunnel type is MPLS tunnel.

The tunnel type bit 1 is set to 1, the tunnel type is GRE tunnel.

The tunnel type bit 2 is set to 1, the tunnel type is UDP tunnel.

Bits 4 to 7 are reserved for future expansion.

The sub-TLV includes fields of type, length and value. Values of the type filed and descriptions corresponding to the values are listed below.

| Value | Description | Reference |
|---|---|---|
| 1 | Traffic engineering node capability description | RFC5073 |
| 2 | Unassigned | |
| 3 | Traffic engineering full connection group TLV (IPv4) | RFC4972 |
| 4 | Traffic engineering full connection group TLV (IPv6) | RFC4972 |
| 5 | Path computation unit discovery protocol | RFC5089 |
| 6 | Nickname | |
| 7 | Multilink transparent transmission distribution tree ID sub-TLV | |
| 8 | sub-TLV for Multilink transparent transmission distribution tree router capability and multitopology capability | |
| 9 | Distribution tree ID sub-TLV used by multilink transparent transmission | |
| 10 | Sub-TLV for VLAN of interest and spanning tree root | |
| 11 | IPv4 traffic engineering router ID | |
| 12 | IPv6 traffic engineering router ID | |
| 13 | Multilink transparent transmission version number | |
| 14 | VLAN group | |
| 15 | Sub-TLV for label of interest and spanning tree root | |
| 16 | Router bridge channel | |
| 17 | Correlation | |
| 18 | Label set | |
| 19-255 | Unassigned | |

### Embodiment 2:

In this embodiment, the BIER technology uses an OSPF routing protocol (including OSPFv2 and OSPFv3) as its control plane protocol. The notification principle and the path calculation mode of the OSPFv2 and those of the OSPFv3 are similar to each other. Therefore, in a scenario where the OSPF is used as the control plane protocol of the BIER technology, an extended OSPF notifies parameters such as tunnel type information.

FIG. 6 is a format chart of an OSPF router informational capability TLV for notifying OSPF router-related capability attribute information. Technologies related to the TLV have defined capability attributes, such as OSPF graceful restart capable and OSPF graceful helper. As illustrated in FIG. 6, the TLV includes type, length and capability information. This embodiment uses the TLV to carry a sub-TLV of tunnel type information. Contents of such sub-TLV are filled in a capability information field. A sub-TLV format of the tunnel type information is illustrated in FIG. 7. Values of the existing type filed and descriptions corresponding to the values are listed below. In the present invention, a value of the type field is recommended to be 6 or undetermined where the value of the type field is assigned by the IEF IANA.

| Bit | Capability | Reference |
|---|---|---|
| 0 | OSPF graceful restart capability | |
| 1 | OSPF graceful restart helper | |
| 2 | OSPF stub router support | |
| 3 | OSPF traffic engineering support | |
| 4 | OSPF overlay point-to-point in a LAN | |
| 5 | OSPF experimental traffic engineering | |

The tunnel type field indicates a type of a tunnel. A length of this field is 8 bits. A value of each bit is described below.

Tunnel type bit 0 is set to 1, the tunnel type is MPLS tunnel.

Tunnel type bit 1 is set to 1, the tunnel type is GRE tunnel.

Tunnel type bit 2 is set to 1, the tunnel type is UDP tunnel.

Bits 4 to 7 are reserved for future expansion.

### Embodiment 3

This embodiment describes a packet transmission process in the case a non-BFR node in a BIER network supports an MPLS tunnel.

FIG. 8 is a flowchart of BIER packet transmission based on an MPLS tunnel. As illustrated in FIG. 8, a BFIR1, a BFR2, a BFR5 and a BFER6 are nodes that support the BIER technology (i.e., BIER nodes). A non-BFR3 and a non-BFR4 are nodes that do not support the BIER technology (i.e., non-BIER nodes). Nodes in the network support MPLS tunnel encapsulation. That is, nodes in the network support an MPLS protocol, and labels may be distributed by an LDP protocol or another technology. The BFIR1 is an ingress BFR node. The BFER6 is an egress BFR node. According to a BIER forwarding principle, a BIER packet transmission process is described below.

In step 301, the ingress node BFIR1 receives a multicast packet that needs to be forwarded to the destination node BFER6.

In step 302, the BFIR1 selects, according to a locally prestored mapping relation between multicast addresses and bitstrings (the mapping relation is specified in advance by a control plane and is a common technology in the industry, and thus is not described here), a corresponding bitstring1 to encapsulate a BIER packet header, and encapsulates an MPLS packet header according to an MPLS label1 of an IGP protocol (e.g., IS-IS protocol or OSPF protocol) notification (notified by the BFR2), and then the BFIR1 transmits the encapsulated packet to the BFR2.

In step 303, after receiving the packet, the BFR2 extracts the BIER packet header, and searches for a corresponding neighbor BFR according to a local bit index forwarding table (BIFT) by using the method illustrated in FIG. 2. A search result is the BFR5. The BFR2 performs an "AND" operation on the bitstring1 field and an F-BM corresponding to the table entry to obtain a bitstring2 to encapsulate a BIER packet header, and then encapsulates an MPLS packet header. A label of the MPLS packet header is an MPLS label2 notified by the BFR5. At this moment, the BFR2 discovers that the BFR5 is not a directly connected neighbor and the non-BFR3 is a directly connected neighbor; and discovers that, according to an IGP notification, the non-BFR3 does not support the BIER technology, the BFR2 needs to forward the encapsulated packet via a tunnel, and the non-BFR3 and the BFR5 support an MPLS label tunnel. Therefore, the BFR2 further encapsulates another layer of MPLS packet header outside the encapsulated BIER packet header and MPLS packet header as a tunnel. A label of the another MPLS packet header is a label23. Then the BFR2 forwards the encapsulated packet to the non-BFR3.

In step 304, after receiving the packet, the non-BFR3 forwards the packet according to the outer layer of MPLS packet header. The non-BFR3 exchanges the MPLS label23 in the outer layer of MPLS packet header with an MPLS label34, and then forwards the packet to the non-BFR4. The non-BFR3 does not process the inner layer of MPLS packet header and the BIER packet header.

In step 305, after receiving the packet, the non-BFR4 also forwards the packet according to the outer layer of MPLS packet header. The non-BFR4 exchanges the MPLS label34 in the outer layer of MPLS packet header with an MPLS label45, and then forwards the packet to the BFR5.

In step 306, after receiving the packet transmitted by the non-BFR4, the BFR5 extracts the outer layer of MPLS packet header. The BFR5 discovers that a destination address is the BFR5 itself, and continues to extract the inner layer of MPLS packet header and the BIER packet header. The BFR5 searches for a corresponding neighbor BFR according to a BIFT by using the method illustrated in FIG. 2. A search result is the BFER6. The BFR5 performs an "AND" operation on the bitstring2 field and an F-BM corresponding to a table entry to obtain a bitstring3 to encapsulate a BIER packet header, and then encapsulates an MPLS packet header. A label of the packet header is an MPLS label3 notified by the BFER6. Then the BFR5 forwards the encapsulated packet to the BFER6.

In step 307, after receiving the packet transmitted by the BFR5, the BFER6 extracts the MPLS packet header and the BIER packet header. The BFER6 discovers that a destination address is the BFER6 itself, decapsulates the MPLS packet header and the BIER packet header, and forwards payload data to a destination user.

At this point, transmission of the multicast packet across the non-BFR node through the MPLS tunnel in the BIER network is completed.

### Embodiment 4

This embodiment describes a packet transmission process when a non-BFR node in a BIER network supports a GRE tunnel.

FIG. 9 is a flowchart of BIER packet transmission based on a GRE tunnel. As illustrated in FIG. 9, a BFIR1, a BFR2, a BFR5 and a BFER6 are nodes that support the BIER technology (i.e., BIER nodes). A non-BFR3 and a non-BFR4 are nodes that do not support the BIER technology (i.e., non-BIER nodes). The BFR2, the non-BFR3, the non-BFR4 and the BFR5 support GRE tunnel encapsulation. The BFIR1 is an ingress BFR node. The BFER6 is an egress BFR node. According to a BIER forwarding principle, a BIER packet transmission process is described below.

In step 401, the ingress node BFIR1 receives a multicast packet that needs to be forwarded to the destination node BFER6.

In step 402, the BFIR1 selects, according to a locally prestored mapping relation between multicast addresses and bitstrings (the mapping relation is specified in advance by a control plane and is a common technology in the industry, and thus is not described here), a corresponding bitstring1 to encapsulate a BIER packet header, and then transmits the encapsulated packet to the BFR2.

In step 403, after receiving the packet, the BFR2 extracts the BIER packet header and searches for a corresponding neighbor BFR according to a local Bit Index Forwarding Table (BIFT) by using the method illustrated in FIG. 2. A search result is the BFR5. The BFR2 performs an "AND" operation on the bitstring1 field and an F-BM corresponding to a table entry to obtain a bitstring2 to encapsulate a BIER packet header. At this moment, the BFR2 discovers that the BFR5 is not a directly connected neighbor and the non-BFR3 is a directly connected neighbor; and discovers that, according to an IGP notification, the non-BFR3 does not support the BIER technology, the BFR2 needs to forward the encapsulated packet via a tunnel, and the non-BFR3 and the BFR5 support a GRE tunnel. Therefore, the BFR2 further encapsulates a layer of GRE header outside the encapsulated BIER packet header as a tunnel. A protocol type field of the GRE packet header in the GRE tunnel indicates that the inside of the GRE packet header is encapsulated as a BIER packet header. After the GRE packet header is encapculated, an IPv4 packet header is further encapsulated outside the encapsulated GRE packet header. A destination address of the IPv4 packet header is an IP address of BFR5. A source address of the IPv4 packet header is an IP address of the BFR2. Then the BFR2 forwards the encapsulated packet to the non-BFR3.

In step 404, after receiving the packet, the non-BFR3 searches an IP routing table according to the outer layer of IP packet header, and forwards the packet without changing contents of the BIER packet header, the GRE packet header and the IPv4 packet header (except a time to live (TLL) field).

In step 405, after receiving the packet, the non-BFR4 also forwards the packet according to the outer layer of IP packet header.

In step 406, after receiving the packet transmitted by the non-BFR4, the BFR5 extracts the outer layer of IP packet header. The BFR5 discovers that a destination address is the BFR5 itself, and continues to extract the GRE packet header and the BIER packet header. The BFR5 searches for a corresponding neighbor BFR according to a BIFT by using the method illustrated in FIG. 2. A search result is the BFER6. The BFR5 performs an "AND" operation on the bitstring2 field and an F-BM corresponding to a table entry to obtain a bitstring3 to encapsulate a BIER packet header. Then the BFR5 forwards the encapsulated packet to the BFER6.

In step 407, after receiving the packet transmitted by the BFR5, the BFER6 extracts the BIER packet header. The BFER6 discovers that a destination address is the BFER6 itself, decapsulates the BIER header, and forwards payload data to a destination user.

### Embodiment 5

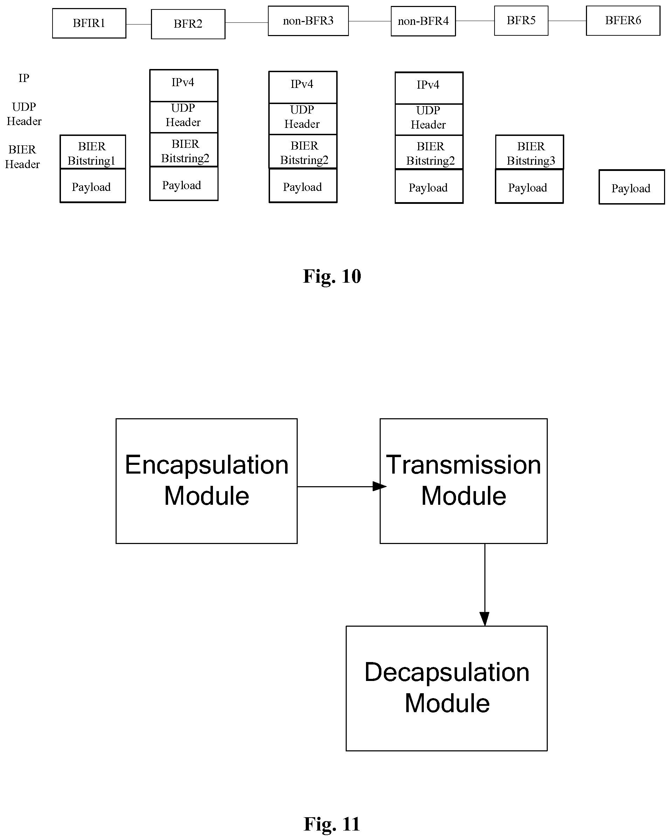

This embodiment describes a packet transmission process when a non-BFR node in a BIER network supports a UDP tunnel. FIG. 10 is a flowchart of BIER packet transmission based on a UDP tunnel. As illustrated in FIG. 10, the BIER packet transmission process includes the steps described below.

In step 501, the ingress node BFIR1 receives a multicast packet that needs to be forwarded to the destination node BFER6.

In step 502, the BFIR1 selects, according to a locally prestored mapping relation between multicast addresses and bitstrings (the mapping relation is specified in advance by a control plane and is a common technology in the industry, and thus is not described here), a corresponding bitstring1 to encapsulate a BIER packet header, and then transmits the encapsulated packet to the BFR2.

In step 503, after receiving the packet, the BFR2 extracts the BIER packet header and searches for a corresponding neighbor BFR according to a local Bit Index Forwarding Table (BIFT) by using the method illustrated in FIG. 2. A search result is the BFR5. The BFR2 performs an "AND" operation on the bitstring1 field and an F-BM corresponding to a table entry to obtain a bitstring2 to encapsulate a BIER packet header. At this moment, the BFR2 discovers that the BFR5 is not a directly connected neighbor and the non-BFR3 is a directly connected neighbor; and discovers that, according to an IGP notification, the non-BFR3 does not support the BIER technology, the BFR2 needs to forward the encapsulated packet via a tunnel, and the non-BFR3 and the BFR5 support a UDP tunnel. Therefore, the BFR2 further encapsulates a layer of UDP header outside the encapsulated BIER packet header as a tunnel. A port number field or a protocol number field of the UDP packet header indicates that the inside of the UDP packet header is the BIER packet header. After the GRE header is encapsulated, an IPv4 packet header is further encapsulated outside the UDP header. A destination address of the IPv4 packet header is an IP address of BFR5. A source address of the IPv4 packet header is an IP address of the BFR2. Then the BFR2 forwards the encapsulated packet to the non-BFR3.

In step 504, after receiving the packet, the non-BFR3 searches an IP routing table according to the outer layer of IP packet header and forwards the packet without changing contents of the BIER packet header, the GRE header and the IPv4 packet header (except a time to live (TLL) field).

In step 505, after receiving the packet, the non-BFR4 also forwards the packet according to the outer layer of IP packet header.

In step 506, after receiving the packet transmitted by the non-BFR4, the BFR5 extracts the outer layer of IP packet header. The BFR5 discovers that a destination address is the BFR5 itself, and continues to extract the UDP header and the BIER header. For the extracted BIER header, the BFR5 searches for a corresponding neighbor BFR according to a BIFT by using the method illustrated in FIG. 2. A search result is the BFER6. The BFR5 performs an "AND" operation on the bitstring2 field and an F-BM corresponding to a table entry to obtain a bitstring3 to encapsulate a BIER packet header. Then the BFR5 forwards the encapsulated packet to the BFER6.

In step 507, after receiving the packet transmitted by the BFR5, the BFER6 extracts the BIER packet header. The BFER6 discovers that a destination address is the BFER6 itself, decapsulates the BIER header, and forwards payload data to a destination user.

Embodiments of the present invention further provide a computer-readable storage medium, which is configured to store computer-executable instructions for executing any method described above.

Moreover, referring to FIG. 11, embodiments of the present invention further provide a BIER packet transmission device. The device is applied to a BIER node and includes an encapsulation module configured to encapsulate a BIER packet according to link capability attribute information supported by a non-BIER node and carried by an extended IGP; and a transmission module configured to transmit the encapsulated BIER packet to the non-BIER node.

The encapsulation module is configured to encapsulate the BIER packet according to a tunnel type that is included in the link capability attribute information supported by the non-BIER node and carried by the extended IGP.

In an embodiment, when the IGP is an IS-IS protocol, the link capability attribute information supported by the non-BIER node is carried by a non-bier-tunnel-type sub-TLV newly added to an extended IS-IS protocol, and the sub-TLV is carried by a router capability TLV of the IS-IS protocol. A tunnel type supported by a non-bier-tunnel-type sub-TLV of the IS-IS protocol includes an MPLS tunnel, a GRE tunnel and a UDP tunnel.

In an embodiment, when the IGP is an OSPF protocol, the link capability attribute information is carried by a non-bier-tunnel-type capability attribute newly added to an extended OSPF protocol, and the attribute is carried by an OSPF router informational capability. A tunnel type supported by an OSPF non-bier-tunnel-type capability attribute of the OSPF protocol includes an MPLS tunnel, a GRE tunnel and a UDP tunnel.

In an embodiment, the device further includes a decapsulation module configured to decapsulate the encapsulated BIER packet received from the non-BIER node to obtain the BIER packet.

Moreover, a processing procedure of the device is the same as that of the method described above, and thus will not be repeated herein.

It will be understood by those of ordinary skill in the art that all or part of the steps in the methods described above may be implemented by related hardware (e.g., a processor) instructed by one or more programs, and these programs may be stored in a computer-readable storage medium such as a ROM, a magnetic disk, an optical disk or the like. Optionally, all or part of the steps in the embodiments described above may also be implemented using one or more integrated circuits. Accordingly, the modules/units in the embodiments described above may be implemented by hardware. For example, the functions of these modules/units may be implemented by one or more integrated circuits. Alternatively, these modules/units may be implemented by software function modules. For example, the functions of these modules/units may be implemented by using a processor to execute program instructions stored in a storage medium. The present invention is not limited to any specific combination of hardware and software.

The above illustrates basic principles, main features and advantages of the present invention. The present invention is not limited to the above embodiments. The above embodiments and specification describe only the principle of the present invention. Various modifications and improvements may be made in the present invention without departing from the spirit and scope of the present invention. These modifications and improvements are within the scope of the present invention.

### INDUSTRIAL APPLICABILITY

The above technical solution realizes that a non-BIER node can transmit a BIER packet in a BIER network.

## Claims

1. A Bit Indexed Explicit Replication, BIER, packet transmission method, comprising:
encapsulating, by a BIER node, a BIER packet according to link capability attribute information supported by a non-BIER node carried by an extended Interior Gateway Protocol, IGP; and
transmitting, by the BIER node, the encapsulated BIER packet to the non-BIER node.

2. The method of claim 1, wherein the encapsulating, by the BIER node, the BIER packet according to the link capability attribute information supported by the non-BIER node carried by the extended IGP comprises:
encapsulating, by the BIER node, the BIER packet according to a tunnel type included in the link capability attribute information supported by the non-BIER node carried by the extended IGP.

3. The method of claim 1, wherein when the IGP is an Intermediate System-to-Intermediate System, IS-IS, protocol, the link capability attribute information supported by the non-BIER node is carried by a non-bier-tunnel-type sub-Type-Length-Value, sub-TLV, newly added to an extended IS-IS protocol, and the sub-TLV is carried by a router capability TLV of the IS-IS protocol.

4. The method of claim 3, wherein a tunnel type supported by non-bier-tunnel-type sub-TLV of the IS-IS protocol comprises a Multi-Protocol Label Switching, MPLS, tunnel, a Generic Routing Encapsulation, GRE, tunnel and a User Datagram Protocol, UDP, tunnel.

5. The method of claim 1, wherein when the IGP is an Open Shortest Path First, OSPF, protocol, the link capability attribute information is carried by a non-bier-tunnel-type capability attribute newly added to an extended OSPF protocol, and the attribute is carried by an OSPF router informational capability.

6. The method of claim 5, wherein a tunnel type supported by an OSPF non-bier-tunnel-type capability attribute of the OSPF protocol comprises a Multi-Protocol Label Switching, MPLS, tunnel, a Generic Routing Encapsulation, GRE, tunnel and a User Datagram Protocol, UDP, tunnel.

7. The method of claim 1, further comprising: decapsulating, by the BIER node, the encapsulated BIER packet received from the non-BIER node to obtain the BIER packet.

8. A Bit Indexed Explicit Replication, BIER, packet transmission device, applied to a BIER node, the device comprising:
an encapsulation module, which is configured to encapsulate a BIER packet according to link capability attribute information supported by a non-BIER node carried by an extended Interior Gateway Protocol, IGP; and
a transmission module, which is configured to transmit the encapsulated BIER packet to the non-BIER node.

9. The device of claim 8, wherein when the IGP is an Intermediate System-to-Intermediate System, IS-IS, protocol, the link capability attribute information supported by the non-BIER node is carried by a non-bier-tunnel-type sub-Type-Length-Value, sub-TLV, newly added to an extended IS-IS protocol, and the sub-TLV is carried by a router capability TLV of the IS-IS protocol.

10. The device of claim 9, wherein a tunnel type supported by a non-bier-tunnel-type sub-TLV of the IS-IS protocol comprises a Multi-Protocol Label Switching, MPLS, tunnel, a Generic Routing Encapsulation, GRE, tunnel and a User Datagram Protocol, UDP, tunnel.

11. The device of claim 8, wherein when the IGP is an Open Shortest Path First, OSPF, protocol, the link capability attribute information is carried by a non-bier-tunnel-type capability attribute newly added to an extended OSPF protocol, and the attribute is carried by an OSPF router informational capability.

12. The device of claim 11, wherein a tunnel type supported by a non-bier-tunnel-type capability attribute of the OSPF protocol comprises a Multi-Protocol Label Switching, MPLS, tunnel, a Generic Routing Encapsulation, GRE, tunnel and a User Datagram Protocol, UDP, tunnel.

13. The device of claim 8, further comprising a decapsulation module configured to decapsulate the encapsulated BIER packet received from the non-BIER node to obtain the BIER packet.

14. The device of claim 8, wherein the encapsulation module is configured to encapsulate the BIER packet according to a tunnel type that is included in the link capability attribute information supported by the non-BIER node carried by the extended IGP.

15. A computer-readable storage medium, which is configured to store computer-executable instructions for executing the method of any one of claims 1 to 7.
